# EUROPÄISCHE PATENTSCHRIFT

(11) **EP 3 870 478 B1**
(45) Veröffentlichungstag und Bekanntmachung des Hinweises auf die Patenterteilung: **08.10.2025**
(21) Anmeldenummer: 19786931.6
(22) Anmeldetag: 09.10.2019
(51) Int. Cl.: B60Q 1/08, B60Q 1/50

(54) **SYSTEM UND VERFAHREN ZUM PROJIZIEREN EINES INFORMATIVEN INHALTS FÜR EIN KRAFTFAHRZEUG**
SYSTEM AND METHOD FOR PROJECTING INFORMATIVE CONTENT FOR A MOTOR VEHICLE
SYSTÈME ET PROCÉDÉ DE PROJECTION D'UN CONTENU INFORMATIF POUR UN VÉHICULE AUTOMOBILE

(30) Priorität: 22.10.2018 DE 102018218038
(43) Veröffentlichungstag der Anmeldung: 01.09.2021
(73) Patentinhaber: VOLKSWAGEN AKTIENGESELLSCHAFT, 38440 Wolfsburg (DE)
(72) Erfinder: ROTH, Joscha, 30177 Hannover (DE); LAMPE, Sebastian, 49205 Hasbergen (DE)
(86) Internationale Anmeldenummer: PCT/EP2019/077311
(87) Internationale Veröffentlichungsnummer: WO 2020/083643

(56) Entgegenhaltungen:
- EP-A1- 1 916 154
- EP-A1- 2 896 937
- WO-A1-2017/050986
- DE-A1- 102009 020 910
- DE-A1- 102016 006 391
- DE-A1- 19 730 414
- US-A1- 2013 243 247

## Beschreibung

Die Erfindung betrifft ein System und ein Verfahren zum Projizieren eines informativen Inhalts für ein Kraftfahrzeug.

Es ist bekannt, informative Inhalte auf Projektionsflächen außerhalb eines Kraftfahrzeugs zu projizieren, um beispielsweise einen Fahrer oder eine andere Person zu warnen oder um eine Information zu vermitteln.

Aus der EP 2 689 966 A1 ist ein Projektionssystem bekannt, bei dem ein informativer Inhalt mittels eines Projektors auf eine Oberfläche außerhalb eines Kraftfahrzeugs projiziert werden kann. Hierbei kann der projizierte Inhalt auf Grundlage einer Lage der Oberfläche in Abhängigkeit einer Perspektive eines vorgegebenen Betrachters korrigiert werden.

Aus der WO 2017/050986 A1 ist ein Verfahren zum Erzeugen eines Lichtmusters zur Information oder Unterstützung eines Beobachters bzw. Fahrers bekannt. Dazu wird eine Beleuchtungsvorrichtung und ein Verfahren zum Projizieren eines vorgebbaren Lichtmusters mittels der Beleuchtungsvorrichtung eines Fahrzeugs in eine Umgebung des Fahrzeugs vorgeschlagen. Dabei erfolgt ein Ermitteln einer Projektionsfläche in der Umgebung des Fahrzeugs, ein Ermitteln oder Bereitstellen einer Position eines vorbestimmten Beobachters und ein pixelweises Steuern einer Leuchteinheit der Beleuchtungsvorrichtung in Abhängigkeit von der ermittelten Projektionsfläche und der ermittelten Position des vorbestimmten Beobachters zum Erzeugen des vorgebbaren Lichtmusters.

Aus der DE 10 2016 006 391 A1 ist ein Fahrerassistenzsystem für ein Kraftfahrzeug bekannt, umfassend eine Beleuchtungseinrichtung, welche dazu ausgelegt ist, in einer ersten Betriebsart ein erstes Lichtstrahlenbündel mit einer ersten Lichtverteilung zur Abbildung eines ersten Bildinhalts auf eine Umgebung des Kraftfahrzeugs bereitzustellen und in einer zweiten Betriebsart ein zweites Lichtstrahlenbündel mit einer zweiten Lichtverteilung zur Abbildung eines zweiten Bildinhalts auf die Umgebung bereitzustellen; und eine Bilderfassungseinheit, welche dazu ausgelegt ist, Bilddaten in Abhängigkeit von dem ersten Bildinhalt und/oder von dem zweiten Bildinhalt zu ermitteln. Das Fahrerassistenzsystem umfasst eine Steuervorrichtung, welche dazu ausgelegt ist, wechselweise die erste Betriebsart und die zweite Betriebsart in periodischer Folge zu aktivieren und eine Kalibriereinheit, welche dazu ausgelegt ist, den ersten Bildinhalt in Abhängigkeit von in der zweiten Betriebsart ermittelten Bilddaten zu verändern. Des Weiteren ist ein Kraftfahrzeug mit einem derartigen Fahrerassistenzsystem bekannt. Überdies ist ein entsprechendes Verfahren bekannt.

Aus der DE 10 2009 020 910 A1 ist ein Scheinwerfersystem für ein Fahrzeug bekannt, mit zumindest einer Lichtquelle, einem Bildgeber, der in Richtung der Lichtemission der Lichtquelle angeordnet ist, einer Umfelderfassungsvorrichtung zum Detektieren von Objekten im Umfeld des Fahrzeugs und einer Steuervorrichtung, die mit der Umfelderfassungsvorrichtung und dem Bildgeber gekoppelt ist und mittels welcher der Bildgeber so steuerbar ist, dass eine veränderbare Lichtemission des Scheinwerfersystems erzeugbar ist. Das Scheinwerfersystem ist dadurch gekennzeichnet, dass das von der Lichtquelle emittierte Licht den Bildgeber durchstrahlt und dass mittels der Steuervorrichtung in Abhängigkeit von dem von der Umfelderfassungsvorrichtung im Umfeld des Fahrzeugs detektierten Objekten die Transmissionsgrade des Bildgebers bereichsabhängig veränderbar sind.

Die DE 197 30 414 A1 beschreibt ein Verfahren und eine Vorrichtung zur vorausschauenden Beurteilung der Fahrbahn, auf der Räder eines Kraftfahrzeugs abrollen, wobei ein Laser-Lichtmuster im Triangulationsverfahren ausgewertet wird.

Die US 2013 / 0 243 247 A1 beschreibt eine periphere Informationserzeugungsvorrichtung. Diese umfasst einen Projektionsabschnitt zum Bilden eines Projektionsmusters, das zumindest teilweise ein kontinuierliches Profil aufweist, auf einer Straße durch Bestrahlen der Straße mit Licht, einen Bilderfassungsabschnitt und einen Bildanalyseabschnitt zum Erzeugen von Randinformationen, die eine Randsituation der Randinformationserzeugungsvorrichtung und der Straße anzeigen, durch Analysieren des Projektionsmusters.

Das Projizieren von informativen Inhalten auf eine Oberfläche außerhalb eines Kraftfahrzeugs ist derzeit nur unbefriedigend gelöst.

Der Erfindung liegt die Aufgabe zu Grunde, ein System und ein Verfahren zum Projizieren eines informativen Inhalts für ein Kraftfahrzeug zu verbessern.

Die Aufgabe wird erfindungsgemäß durch ein System mit den Merkmalen des Patentanspruchs 1 und ein Verfahren mit den Merkmalen des Patentanspruchs 6 gelöst. Vorteilhafte Ausgestaltungen der Erfindung ergeben sich aus den Unteransprüchen.

Insbesondere wird ein System zum Projizieren eines informativen Inhalts für ein Kraftfahrzeug geschaffen, umfassend eine Umfeldsensorik, eine Steuerung und mindestens eine Projektionseinrichtung zum Projizieren des Inhalts. Die Umfeldsensorik ist derart ausgebildet, eine Lage einer Projektionsfläche außerhalb des Kraftfahrzeugs zu erfassen. Die Steuerung ist derart ausgebildet, einen zu projizierenden Inhalt zu empfangen und auf Grundlage der erfassten Lage derart anzupassen, dass dieser beim Projizieren auf die Projektionsfläche aus Sicht eines vorgegebenen Betrachters in perspektivisch korrekter Form erfasst werden kann, wobei die Steuerung ferner derart ausgebildet ist, die mindestens eine Projektionseinrichtung auf Grundlage des angepassten Inhalts anzusteuern. Die mindestens eine Projektionseinrichtung ist erfindungsgemäß ein hochauflösender Scheinwerfer.

Ferner wird ein Verfahren zum Projizieren eines informativen Inhalts für ein Kraftfahrzeug gemäß Anspruch 6 zur Verfügung gestellt, umfassend die folgenden Schritte: Erfassen einer Lage einer Projektionsfläche mittels einer Umfeldsensorik, Empfangen des zu projizierenden Inhalts und Anpassen des empfangenen zu projizierenden Inhalts auf Grundlage der erfassten Lage mittels einer Steuerung, sodass der zu projizierende Inhalt beim Projizieren auf die Projektionsfläche aus Sicht eines vorgegebenen Betrachters in perspektivisch korrekter Form erfasst werden kann, und Projizieren des angepassten Inhalts auf die Projektionsfläche mittels mindestens einer Projektionseinrichtung, wobei die mindestens eine Projektionseinrichtung erfindungsgemäß ein hochauflösender Scheinwerfer ist.

Eine Grundidee der Erfindung ist, zum Projizieren eines informativen Inhalts auf eine Projektionsfläche einen hochauflösenden Scheinwerfer als Projektionseinrichtung zu verwenden. Insbesondere ist der mindestens eine hochauflösende Scheinwerfer ein Scheinwerfer des Kraftfahrzeugs. Die Umfeldsensorik erfasst eine Lage der Projektionsfläche. Die Projektionsfläche kann beispielsweise eine Fahrbahn, eine Rückseite eines vorausfahrenden Kraftfahrzeugs, ein Bürgersteig oder eine sonstige geeignete Oberfläche, beispielsweise eine Wand in einem Parkhaus, sein. Auf Grundlage der erfassten Lage passt die Steuerung einen zu projizierenden Inhalt, beispielsweise eine Infographik oder ein Piktogramm, derart an, dass der Inhalt beim Projizieren auf die Projektionsfläche aus Sicht eines vorgegebenen Betrachters in perspektivisch korrekter Form erfasst werden kann. Hierzu wird beispielsweise eine perspektivische Verzerrung angepasst und der Inhalt mittels der Steuerung derart vorverzerrt, dass dieser beim Projizieren aus Sicht des vorgegebenen Betrachters in perspektivisch korrekter Darstellung erscheint. Die Steuerung steuert den hochauflösenden Scheinwerfer dann gemäß dem angepassten Inhalt an.

Der Vorteil der Erfindung ist, dass durch die Verwendung eines hochauflösenden Scheinwerfers als Projektionseinrichtung kein zusätzlicher Projektor notwendig ist. Hierdurch können Material- und Herstellungskosten sowie Bauraum eingespart werden.

Der vorgegebene Betrachter kann beispielsweise ein Fahrer, ein Beifahrer oder ein sonstiger Passagier des Kraftfahrzeugs sein. Der vorgegebene Betrachter kann sich aber auch außerhalb des Kraftfahrzeugs befinden, beispielsweise kann dies ein Fußgänger oder ein Fahrer oder Passagier eines entgegenkommenden Kraftfahrzeugs sein. Der zu projizierende Inhalt wird von der Steuerung dann entsprechend der jeweiligen Perspektive des vorgegebenen Betrachters angepasst. Es kann vorgesehen sein, dass die Umfeldsensorik oder eine weitere Sensorik derart ausgebildet ist, eine Position und Orientierung und/oder Blickrichtung des vorgegebenen Betrachters, beispielsweise mittels einer Kamera, zu erfassen und zu bestimmen und der Steuerung zuzuführen, sodass diese auf Grundlage der zugeführten Daten den vorgegebenen Betrachter und dessen Position, Orientierung und/oder Blickrichtung festlegen kann. Es kann aber auch vorgesehen sein, dass der vorgegebene Betrachter fest vorgegeben ist, z.B. kann der vorgegebene Betrachter stets der Fahrer des Kraftfahrzeugs sein. Aufgrund der festen Position des Fahrers in dem Kraftfahrzeug ist auch dessen Position in Bezug auf den hochauflösenden Scheinwerfer konstant. Die Blickrichtung kann sich in diesem Fall allein aufgrund der Wahl einer Position der Projektionsfläche ändern.

Ein hochauflösender Scheinwerfer ist insbesondere ein Scheinwerfer, der ein Feld (engl. Array) aus einzelnen Lichtquellen oder einzelnen Bildpunkten umfasst, welche jeweils einzeln angesteuert werden können. Hierdurch können beliebige Muster und Informationen projiziert werden.

Der mindestens eine hochauflösende Scheinwerfer kann insbesondere ein hochauflösender Frontscheinwerfer des Kraftfahrzeugs sein. Ferner kann vorgesehen sein, dass mindestens zwei der Frontscheinwerfer des Kraftfahrzeugs, insbesondere ein rechter und ein linker Frontscheinwerfer, im Zusammenspiel miteinander in dem System betrieben werden.

Der mindestens eine hochauflösende Scheinwerfer kann zumindest einen Modulator in Form eines Digital Mirror Device oder eines Liquid Crystal Displays oder eines Liquid Crystal on Silicon umfassen. Einzelne Bildelemente des Modulators lassen sich einzeln ansteuern, sodass beliebige Inhalte erzeugt werden können. Beispielweise umfasst der mindestens eine Scheinwerfer dann eine Lichtquelle, eine Abbildungsoptik zwischen der Lichtquelle und dem Modulator und eine Projektionsoptik zum Projizieren des vom Modulator modulierten Lichts auf die Projektionsfläche.

Alternativ kann der mindestens eine Scheinwerfer eine Mikropixel-LED umfassen. Eine solche Mikropixel-LED umfasst mehrere Hundert bis Tausend Pixel, welche sich jeweils einzeln ansteuern lassen. Erhältlich sind insbesondere Mikropixel-LEDs mit einer Fläche von 4x4 mm² und 1024 Bildelementen (Pixel). In Zukunft wird es Mikropixel-LEDs geben, die zwischen 10 und 20 Tausend Bildelemente aufweisen. Hierdurch lassen sich beliebige Inhalte in hoher Auflösung ausgeben. Es kann vorgesehen sein, dass der mindestens eine hochauflösende Scheinwerfer zusätzlich eine Projektionsoptik hinter der Mikropixel-LED aufweist.

Der zu projizierende Inhalt kann insbesondere in Form einer Graphik, beispielsweise in Form einer graphischen Informationen ausgebildet sein. Dies können beispielsweise Verkehrszeichen oder Piktogramme sein. Ferner kann auch vorgesehen sein, dass der zu projizierende Inhalt eine Information in Form eines Textes umfasst. Der zu projizierende Inhalt muss hierbei nicht statisch ausgebildet sein, sondern kann sich zeitlich auch ändern. So kann der zu projizierende Inhalt auch aus einem aus mehreren Einzelbildern zusammengesetzten Film bestehen.

Es kann vorgesehen sein, dass der mindestens eine Scheinwerfer einen Gaußfilter umfasst.

Dieser Gaußfilter dient der Kantenglättung, sodass beispielsweise eine auf die Projektionsfläche projizierte Infographik auf Grund einer Auflösungsbegrenzung des hochauflösenden Scheinwerfers nicht verpixelt erscheint, sondern Kanten und Ecken abgerundet und deshalb in für den vorgegebenen Betrachter ansprechenderer Form projiziert werden können.

Es ist vorgesehen, dass die Umfeldsensorik mindestens einen Laser und mindestens eine Kamera umfasst, wobei die Steuerung derart ausgebildet ist, den mindestens einen Laser und die mindestens eine Kamera derart anzusteuern, dass der mindestens eine Laser ein vorgegebenes optisches Gitter auf die Projektionsfläche abbildet und die mindestens eine Kamera dieses abgebildete optische Gitter erfasst, wobei die Steuerung ferner derart ausgebildet ist, eine Lage und eine Oberflächenbeschaffenheit der Projektionsfläche auf Grundlage von von dem auf die Projektionsfläche projizierten optischen Gitter erfassten Kameradaten zu bestimmen. Dies ermöglicht insbesondere eine hochauflösende Bestimmung der Oberflächenbeschaffenheit. Das optische Gitter kann beispielsweise ein regelmäßiges Raster sein, beispielsweise aus regelmäßigen, rechtwinklig zueinander angeordneten Geraden bestehen. Das optische Gitter kann jedoch auch eine komplexere Form aufweisen. Beim Abbilden des optischen Gitters auf die Projektionsfläche wird dieses entsprechend der Lage der Projektionsfläche perspektivisch verzerrt und entsprechend der Oberflächenbeschaffenheit einzelner Abschnitte der Projektionsfläche in diesen Abschnitten jeweils verzeichnet, das heißt insbesondere aus Sicht des vorgegebenen Betrachters bzw. der mindestens einen Kamera gestaucht und/oder gestreckt etc. Da eine Form des optischen Gitters bekannt ist, kann aus den erfassten Kameradaten die Lage und die Oberflächenbeschaffenheit der Projektionsfläche bestimmt und bereitgestellt werden.

Es ist ferner vorgesehen, dass eine Wellenlänge des mindestens einen Lasers derart gewählt ist, dass ein menschlicher Betrachter diese nicht wahrnehmen kann. Anders ausgedrückt wird das optische Gitter derart abgebildet, dass der vorgegebene Betrachter dieses nicht wahrnimmt und lediglich die Projektion des Inhalts erfassen und wahrnehmen kann. Die Wellenlänge kann beispielsweise im für das menschliche Auge nicht sichtbaren infraroten Wellenlängenbereich liegen.

In einer Ausführungsform ist vorgesehen, dass die Umfeldsensorik eine Kamera und/oder eine Light Detection and Ranging-(LIDAR)-Einrichtung und/oder einen Laserscanner umfasst. Hierdurch kann die Lage der Projektionsfläche in hoher Auflösung bestimmt werden.

In einer weiteren Ausführungsform ist vorgesehen, dass die Steuerung ferner derart ausgebildet ist, den empfangenen Inhalt zusätzlich auf Grundlage der erfassten Oberflächenbeschaffenheit derart anzupassen, dass dieser beim Projizieren auf die Projektionsfläche aus Sicht des vorgegebenen Betrachters über eine gesamte Projektion hinweg in unverzeichneter Form erfasst werden kann. Die Oberflächenbeschaffenheit umfasst insbesondere eine Orientierung von Teilen oder Abschnitten der Projektionsfläche. Ferner umfasst die Oberflächenbeschaffenheit auch eine Oberflächeneigenschaft, welche ein Reflexions- und/oder Remissionsvermögen etc. umfasst. Die Oberflächenbeschaffenheit kann beispielsweise mittels einer Kamera und/oder mittels eines LIDARs erfasst werden. In unverzeichneter Form soll hierbei insbesondere bedeuten, dass die aus Sicht des Betrachters erfasste Projektion des angepassten Inhalts an allen Positionen dem zu projizierenden Inhalt entsprechen soll, insbesondere in Bezug auf Größenverhältnisse einzelner Teile der Projektion zueinander. Der von dem Betrachter erfassbare Inhalt entspricht dann dem zu projizierenden Inhalt.

Insbesondere kann hierbei vorgesehen sein, dass die Projektionsfläche in einzelne Abschnitte unterteilt wird, wobei für jeden der Abschnitte eine Lage, das heißt insbesondere eine Orientierung einer Oberflächennormalen, bestimmt wird. Auf diese Weise kann die Projektionsfläche in ein regelmäßiges, beispielsweise quadratisches, Raster unterteilt werden. Für jedes Rasterelement wird dann beispielsweise eine Oberflächennormale mittels der Umfeldsensorik bestimmt. Auf Grundlage der bestimmten Oberflächennormalen der einzelnen Rasterelemente wird dann der zu projizierende Inhalt angepasst, sodass dieser beim Projizieren auf die Projektionsfläche aus Sicht des vorgegebenen Betrachters in perspektivisch korrekter und unverzeichneter Form erfasst werden kann. Insbesondere können hierdurch Unebenheiten der Projektionsfläche beim Anpassen mit berücksichtigt werden. Für den vorgegebenen Betrachter erscheint der projizierte Inhalt dann in unverzerrter und unverzeichneter Form.

Insbesondere kann vorgesehen sein, dass hierzu aus der erfassten Oberflächenbeschaffenheit ein dreidimensionales Modell der Projektionsfläche erstellt wird. Auf Grundlage dieses dreidimensionalen Modells erstellt die Steuerung eine virtuelle Rückprojektion des unangepassten zu projizierenden Inhalts aus Sicht des vorgegebenen Betrachters. Der zu projizierende Inhalt wird dann aus Sicht des Betrachters auf Grundlage des dreidimensionalen Modells der Projektionsfläche zurückgerechnet auf den vom hochauflösenden Scheinwerfer zu projizierenden angepassten Inhalt, d.h. der Weg des Lichts wird ausgehend von einem Zielinhalt am Ort des vorgegebenen Betrachters (das was der vorgegebene Betrachter wahrnehmen soll) hin zu dem angepassten vom hochauflösenden Scheinwerfer zu projizierenden Inhalt (das was der Scheinwerfer projizieren soll) zurückverfolgt. Als Ergebnis liefert die Rückrechnung beispielsweise eine Abbildungsfunktion zwischen dem zu projizierenden Inhalt und dem angepassten Inhalt, in der sich das dreidimensionale Modell niederschlägt.

Insbesondere können durch das Berücksichtigen der Oberflächenbeschaffenheit beliebig strukturierte Projektionsflächen verwendet werden. Beispielsweise kann die Projektionsfläche zumindest teilweise auf einem nicht-flächig ausgebildeten Objekt positioniert sein, beispielsweise einem Brückenpfeiler oder einem Poller. Durch das Berücksichtigen der Oberflächenbeschaffenheit beim Anpassen kann der zu projizierende Inhalt auch auf dem Brückenpfeiler oder dem Poller aus Sicht des vorgegebenen Betrachters in unverzeichneter Form wahrgenommen werden.

In einer weiteren Ausführungsform ist vorgesehen, dass die Steuerung ferner derart ausgebildet ist, aktuelle und/oder vorhergesagte Rollbewegungen und/oder Nickbewegungen und/oder Gierbewegungen des Kraftfahrzeugs beim Anpassen zu berücksichtigen. Auf diese Weise kann der Inhalt genau positioniert auf die Projektionsfläche projiziert werden. Auch ein Projizieren während einer Fahrt des Kraftfahrzeugs wird hierdurch verbessert, da Bewegungen des Kraftfahrzeugs kompensiert werden können. Die Rollbewegungen und/oder die Nickbewegungen und/oder die Gierbewegungen des Kraftfahrzeugs können beispielsweise mittels eines intertialen Messsystems erfasst und von der Steuerung bei einer Bordelektronik des Kraftfahrzeugs abgefragt werden.

In einer weiterbildenden Ausführungsform ist vorgesehen, dass zusätzlich eine Dauer des Abbildens und Erfassens des optischen Gitters derart gewählt ist, dass ein menschlicher Betrachter das abgebildete optische Gitter nicht wahrnehmen kann. Anders ausgedrückt wird das optische Gitter derart abgebildet, dass der vorgegebene Betrachter dieses nicht wahrnimmt und lediglich die Projektion des Inhalts erfassen und wahrnehmen kann. Die Dauer kann aufgrund der Reaktionszeiten des menschlichen Auges beispielsweise wenige Millisekunden oder darunter betragen.

Es ist weiter vorgesehen, dass die Steuerung ferner derart ausgebildet ist, eine Intensitätsverteilung innerhalb des zu projizierenden Inhalts auf Grundlage der erfassten Lage und der erfassten Oberflächenbeschaffenheit anzupassen, wobei die Intensitätsverteilung auf Grundlage eines Reflexions- und/oder Remissionsvermögens einzelner Abschnitte der Projektionsfläche angepasst wird, sodass beim Projizieren eine aus Sicht des vorgegebenen Betrachters hinsichtlich der Intensität homogene Ausleuchtung erreicht wird.

In einer weiteren Ausführungsform ist vorgesehen, dass die Steuerung ferner derart ausgebildet ist, zusätzlich eine Ausleuchtungsprofilinformation zu empfangen und den hochauflösenden Scheinwerfer derart anzusteuern, dass ein vorgegebener Bereich außerhalb des Kraftfahrzeugs in vorgegebener Weise ausgeleuchtet ist. Die Ausleuchtungsprofilinformation umfasst hierbei Informationen zu Bereichen im Umfeld des Kraftfahrzeugs, die ausgeleuchtet werden sollen. Insbesondere können hierbei auch von der Umfeldsensorik erfasste Umfelddaten berücksichtigt werden. Die Steuerung ist dann derart ausgebildet, das Ausleuchtungsprofil auf Grundlage der erfassten Umfelddaten derart anzupassen, dass der vorgegebene Bereich außerhalb des Kraftfahrzeugs in vorgegebener Weise ausgeleuchtet ist bzw. wird. Insbesondere können hierbei auch Lagen und/oder Oberflächenbeschaffenheiten von auszuleuchtenden Oberflächen im Umfeld des Kraftfahrzeugs berücksichtigt werden, beispielsweise um Ausleuchtungsintensitäten abschnittsweise zu verändern oder anzupassen.

In einer weiterbildenden Ausführungsform ist vorgesehen, dass die Steuerung ferner derart ausgebildet ist, den hochauflösenden Scheinwerfer in zumindest zwei Betriebszuständen anzusteuern, wobei in einem ersten Betriebszustand eine Projektion des zu projizierenden Inhalts erfolgt und in einem zweiten Betriebszustand eine Ausleuchtung gemäß der empfangenen Ausleuchtungsprofilinformation erfolgt. Es kann ferner auch ein dritter Betriebszustand vorgesehen sein, in dem sowohl eine Ausleuchtung als auch ein Projizieren des zu projizierenden Inhalts erfolgt.

Teile des Systems, insbesondere die Steuerung, können einzeln oder zusammengefasst als eine Kombination von Hardware und Software ausgebildet sein, beispielsweise als Programmcode, der auf einem Mikrocontroller oder Mikroprozessor ausgeführt wird.

Die Vorteile einzelner Ausführungsformen des Verfahrens sind die gleichen wie die Vorteile der einzelnen Ausführungsformen des Systems.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform Systems zum Projizieren eines informativen Inhalts für ein Kraftfahrzeug;
- Fig. 2a: eine schematische Darstellung einer Projektion eines Zebrastreifens aus einer Perspektive im Kraftfahrzeug;
- Fig. 2b: eine schematische Darstellung der in Fig. 2a gezeigten Projektion eines Zebrastreifens aus einer Perspektive außerhalb des Kraftfahrzeugs;
- Fig. 3a: eine schematische Darstellung einer Projektion eines Pfeils auf eine ebene Fahrbahnoberfläche;
- Fig. 3b: eine schematische Darstellung einer Projektion des Pfeils auf eine unebene Fahrbahnoberfläche;
- Fig. 4a: eine schematische Darstellung einer Projektion eines "STOP"-Textes auf eine ebene Fahrbahnoberfläche;
- Fig. 4b: eine schematische Darstellung einer Projektion des "STOP"-Textes auf eine unebene Fahrbahnoberfläche.

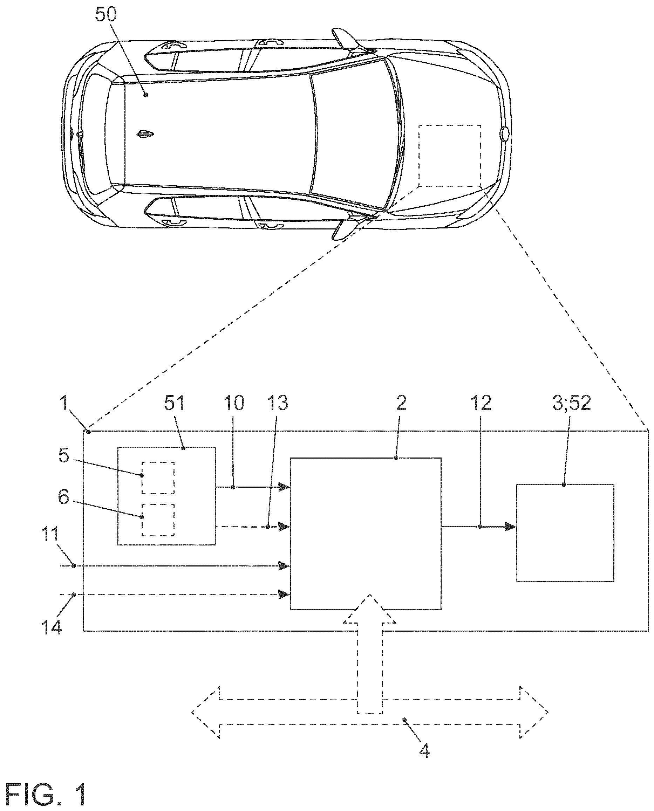

In Fig. 1 ist eine schematische Darstellung einer Ausführungsform des Systems 1 zum Projizieren eines informativen Inhalts n für ein Kraftfahrzeug 50 dargestellt. Das System 1 umfasst eine Umfeldsensorik 51, eine Steuerung 2 und einen hochauflösenden Scheinwerfer 52 als Projektionseinrichtung 3. Das System 1 ist in dem Kraftfahrzeug 50 angeordnet.

Die Umfeldsensorik 51, beispielsweise eine Kamera und/oder ein LIDAR-Sensor, erfasst eine Lage 10 einer Projektionsfläche 20 außerhalb des Kraftfahrzeugs 50. Die Steuerung 2 empfängt einen zu projizierenden Inhalt 11 und passt diesen auf Grundlage der erfassten Lage 10 derart an, dass der zu projizierende Inhalt 11 beim Projizieren auf die Projektionsfläche aus Sicht eines vorgegebenen Betrachters von diesem in perspektivisch korrekter Form erfasst werden kann.

Nach dem Anpassen steuert die Steuerung 2 den hochauflösenden Scheinwerfer 52 auf Grundlage des angepassten Inhalts 12 an, sodass dieser den angepassten Inhalt 12 auf die Projektionsfläche projiziert.

Es kann in einer Ausführungsform vorgesehen sein, dass die Umfeldsensorik 51 derart ausgebildet ist, zusätzlich eine Oberflächenbeschaffenheit 13 der Projektionsfläche zu erfassen, wobei die Steuerung 2 ferner derart ausgebildet ist, den empfangenen Inhalt 11 zusätzlich auf Grundlage der erfassten Oberflächenbeschaffenheit 13 derart anzupassen, dass dieser beim Projizieren auf die Projektionsfläche aus Sicht des vorgegebenen Betrachters von diesem über eine gesamte Projektion hinweg in unverzeichneter Form erfasst werden kann.

In einer Ausführungsform kann vorgesehen sein, dass die Steuerung 2 aktuelle und/oder vorhergesagte Rollbewegungen und/oder Nickbewegungen und/oder Gierbewegungen des Kraftfahrzeugs 50 beim Anpassen berücksichtigt. Beispielsweise kann die Steuerung 2 hierzu zugehörige Werte bei einer Bordelektronik des Kraftfahrzeugs 50 abfragen, beispielsweise über einen Controller-Area-Network-(CAN)-Bus 4.

Es ist vorgesehen, dass die Umfeldsensorik 51 einen Laser 5 und eine Kamera 6 umfasst, wobei die Steuerung 2 derart ausgebildet ist, den Laser 5 und die Kamera 6 derart anzusteuern, dass der Laser 5 ein vorgegebenes optisches Gitter, beispielsweise ein regelmäßiges Raster aus Linien, auf die Projektionsfläche abbildet und die Kamera 6 dieses abgebildete optische Gitter erfasst. Die Steuerung 2 oder die Umfeldsensorik 2 bestimmt dann eine Lage 10 und/oder eine Oberflächenbeschaffenheit 13 der Projektionsfläche auf Grundlage von von dem auf die Projektionsfläche projizierten optischen Gitter erfassten Kameradaten.

In einer weiterbildenden Ausführungsform kann vorgesehen sein, dass eine Dauer des Abbildens und Erfassens des optischen Gitters derart gewählt ist, dass ein menschlicher Betrachter das abgebildete optische Gitter nicht wahrnehmen kann. Es ist vorgesehen, dass eine Wellenlänge des Lasers 6 derart gewählt ist, dass ein menschlicher Betrachter diese nicht wahrnehmen kann. Hierdurch können die Lage 10 und/oder die Oberflächenbeschaffenheit 13 bestimmt werden, ohne dass der Betrachter dies mitbekommt.

Es ist vorgesehen, dass die Steuerung 2 eine Intensitätsverteilung innerhalb des zu projizierenden Inhalts auf Grundlage der erfassten Lage 10 und der erfassten Oberflächenbeschaffenheit 13 anpasst.

In einigen Ausführungsformen kann vorgesehen sein, dass die Steuerung 2 zusätzlich eine Ausleuchtungsprofilinformation 14 empfängt und den hochauflösenden Scheinwerfer 52 derart ansteuert, dass ein vorgegebener Bereich außerhalb des Kraftfahrzeugs 50 in vorgegebener Weise ausgeleuchtet ist oder wird.

In einer weiterbildenden Ausführungsform kann vorgesehen sein, dass die Steuerung 2 den hochauflösenden Scheinwerfer 52 in zumindest zwei Betriebszuständen ansteuern kann, wobei in einem ersten Betriebszustand eine Projektion des zu projizierenden Inhalts 11 erfolgt und in einem zweiten Betriebszustand eine Ausleuchtung gemäß der empfangenen Ausleuchtungsprofilinformation 14 erfolgt. Ferner kann ein dritter Betriebszustand vorgesehen sein, indem sowohl eine Ausleuchtung als auch eine Projektion des informativen Inhalts erfolgt.

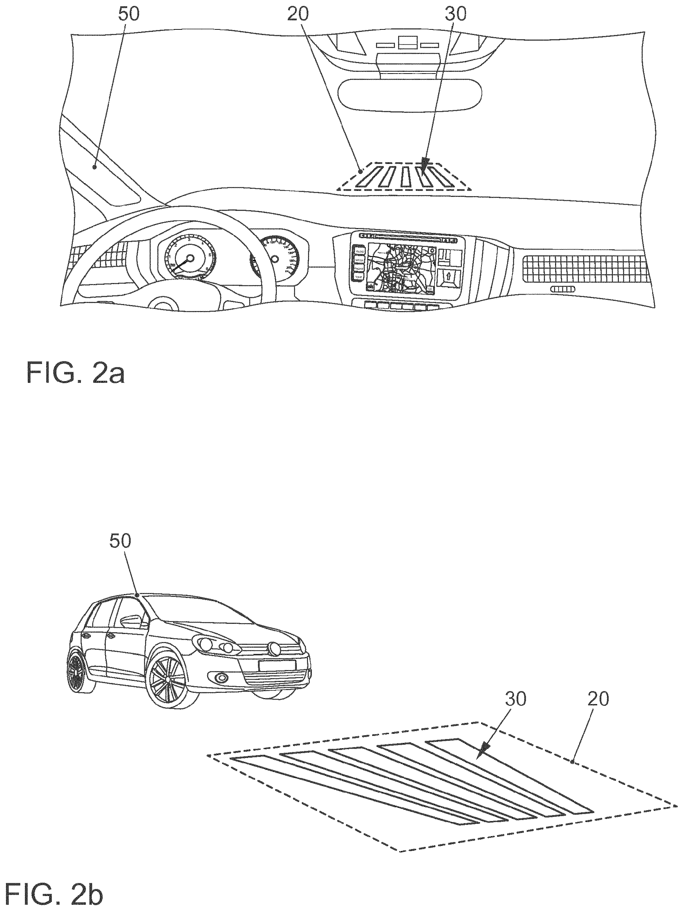

In den Figuren 2a und 2b sind schematische Darstellungen einer Projektion 30 eines Zebrastreifens auf eine Projektionsfläche 20 aus zwei unterschiedlichen Perspektiven zur Verdeutlichung der Erfindung gezeigt, wobei Fig. 2a die Projektion 30 aus einer Perspektive innerhalb des Kraftfahrzeugs 50 und Fig. 2b die gleiche Projektion 30 aus einer Perspektive außerhalb des Kraftfahrzeugs 50 zeigt. Deutlich zu erkennen ist, dass ein Betrachter aus der in Fig. 2a dargestellten Perspektive die Projektion 30 des Zebrastreifens perspektivisch korrekt wahrnehmen kann, aus der in Fig. 2b dargestellten Perspektive hingegen nicht, da die Projektion 30 dort perspektivisch nicht korrekt dargestellt wird. Mit Hilfe des Systems kann die Projektion 30 derart angepasst werden, dass die Projektion 30 des Zebrastreifens alternativ auch aus der Sicht des Betrachters in der in Fig. 2b dargestellten Perspektive perspektivisch korrekt dargestellt wird, indem beispielsweise eine entsprechende Vorverzerrung des zu projizierenden Inhalts, d.h. der Graphik des Zebrastreifens, erfolgt.

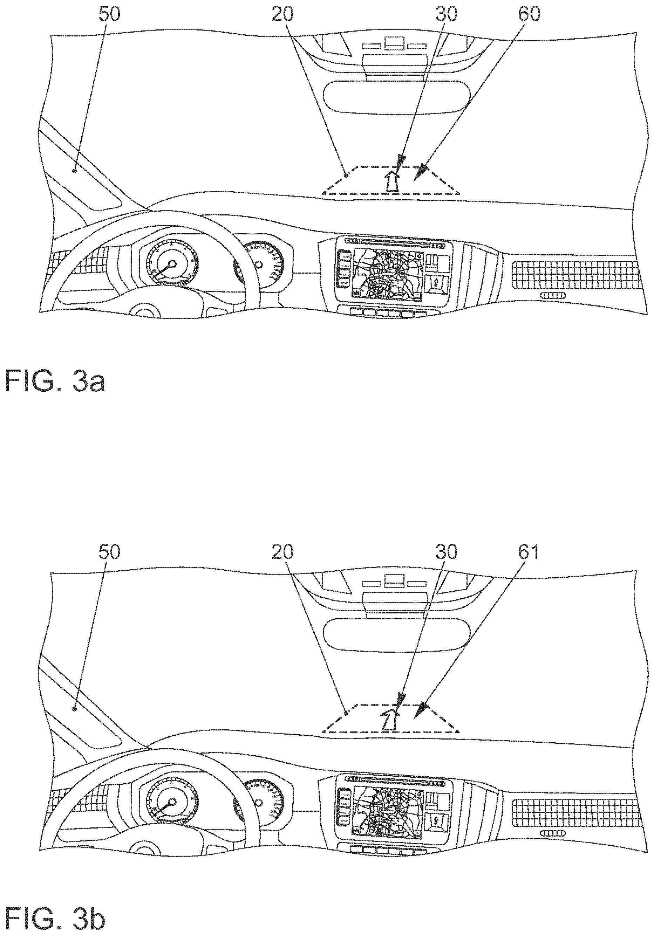

In den Figuren 3a und 3b sind schematische Darstellungen einer Projektion 30 eines Pfeils auf eine Projektionsfläche 20 jeweils aus derselben Perspektive zur Verdeutlichung der Erfindung gezeigt. In Fig. 3a erfolgt die Projektion 30 des Pfeils auf eine ebene Fahrbahnoberfläche 60, sodass die Projektionsfläche 20 eine ebene Oberflächenstruktur aufweist. In Fig. 3b erfolgt die Projektion 30 des Pfeils bei ansonsten gleichen Gegebenheiten hingegen auf eine unebene Fahrbahnoberfläche 61, sodass die Projektionsfläche 20 eine unebene Oberflächenstruktur aufweist. Aufgrund der lokalen Unebenheiten der unebenen Fahrbahnoberfläche 61 variieren Abschnitte der Projektion 30 hinsichtlich ihrer Ausrichtung und einer Flächengröße, sodass die Projektion 30 des Pfeils lokal deformiert wird und dieser aus Sicht eines vorgegebenen Betrachters im Kraftfahrzeug 50 nur fehlerhaft wahrgenommen werden kann.

Durch Bestimmen einer Oberflächenbeschaffenheit der unebenen Fahrbahnoberfläche 61 mittels der Umfeldsensorik des Kraftfahrzeugs 50 können die Unebenheiten beim Anpassen des zu projizierenden Inhalts berücksichtigt werden. Beispielsweise im Wege einer von dem Betrachter ausgehenden virtuellen Rückprojektion wird der zu projizierende Inhalt unter Berücksichtigung der erfassten Oberflächenbeschaffenheit derart angepasst, dass der zu projizierende Inhalt beim Projizieren aus Sicht des vorgegebenen Betrachters (hier einem Betrachter im Kraftfahrzeug 50) sowohl perspektivisch korrekt als auch über eine gesamte Projektion 30 hinweg in unverzeichneter Form erfasst werden kann.

Insbesondere kann vorgesehen sein, dass hierzu von der Steuerung ein dreidimensionales Modell von der Projektionsfläche 20, das heißt von der unebenen Fahrbahnoberfläche 61, erstellt wird.

Durch das beschriebene System und das beschriebene Verfahren lässt sich der Pfeil auch auf einer unebenen Fahrbahnoberfläche 61 aus Sicht des vorgegebenen Betrachters perspektivisch korrekt und über eine gesamte Projektion 30 hinweg in unverzeichneter Form wahrnehmen, wie dies in Fig. 3a der Fall ist.

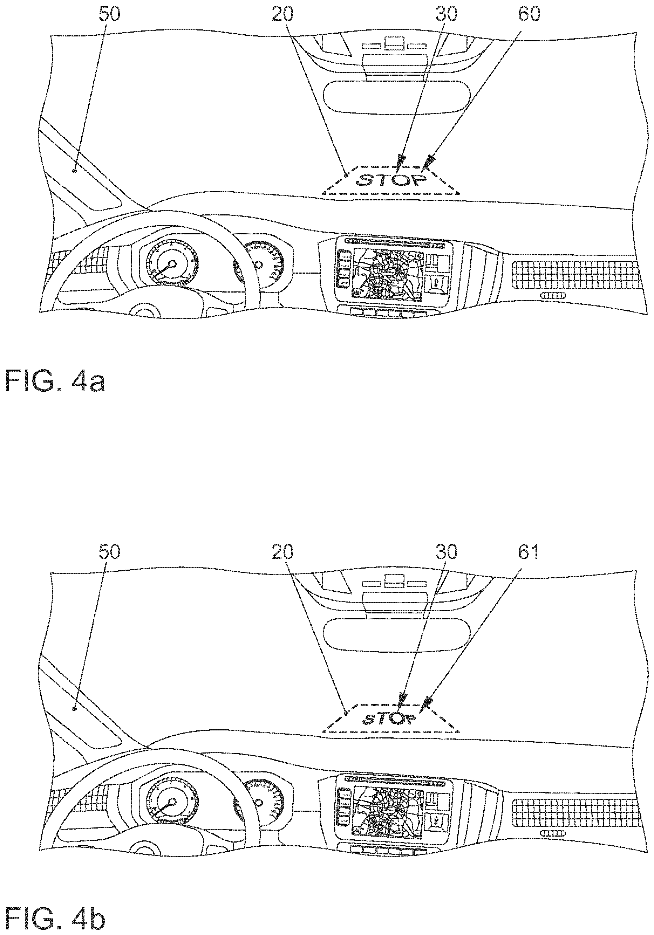

In den Figuren 4a und 4b sind weitere schematische Darstellungen einer Projektion 30 eines "STOP"-Textes auf eine Projektionsfläche 20 jeweils aus derselben Perspektive zur Verdeutlichung der Erfindung gezeigt. In Fig. 4a erfolgt die Projektion 30 des "STOP"-Textes auf eine ebene Fahrbahnoberfläche 60, sodass die Projektionsfläche 20 eine ebene Oberflächenstruktur aufweist. In Fig. 4b erfolgt die Projektion 30 des "STOP"-Textes bei ansonsten gleichen Gegebenheiten hingegen auf eine unebene Fahrbahnoberfläche 61, sodass die Projektionsfläche 20 eine unebene Oberflächenstruktur aufweist. Aufgrund der lokalen Unebenheiten der unebenen Fahrbahnoberfläche 61 variieren Abschnitte der Projektion 30 hinsichtlich ihrer Ausrichtung und einer Flächengröße, sodass die Projektion 30 des "STOP"-Textes lokal deformiert ist und der "STOP"-Text aus Sicht eines vorgegebenen Betrachters im Kraftfahrzeug 50 nur fehlerhaft wahrgenommen werden kann. So erscheinen die mittleren beiden Buchstaben deutlich größer als die äußeren beiden Buchstaben.

Durch das beschriebene System und das beschriebene Verfahren lässt sich der "STOP"-Text auch auf einer unebenen Fahrbahnoberfläche 61 aus Sicht des vorgegebenen Betrachters perspektivisch korrekt und über eine gesamte Projektion 30 hinweg in unverzeichneter Form wahrnehmen, wie dies in Fig. 4a der Fall ist.

### Bezugszeichenliste

- 1: System
- 2: Steuerung
- 3: Projektionseinrichtung
- 4: CAN-Bus
- 5: Laser
- 6: Kamera
- 10: Lage
- 11: Inhalt
- 12: angepasster Inhalt
- 13: Oberflächenbeschaffenheit
- 14: Ausleuchtungsprofilinformation
- 20: Projektionsfläche
- 30: Projektion
- 50: Kraftfahrzeug
- 51: Umfeldsensorik
- 52: hochauflösender Scheinwerfer
- 60: ebene Fahrbahnoberfläche
- 61: unebene Fahrbahnoberfläche

## Patentansprüche

1. System (1) zum Projizieren eines informativen Inhalts für ein Kraftfahrzeug (50), umfassend:
eine Umfeldsensorik (51),
eine Steuerung (2) und
mindestens eine Projektionseinrichtung (3) zum Projizieren des Inhalts (11),
wobei die Umfeldsensorik (51) derart ausgebildet ist, eine Lage (10) einer Projektionsfläche (20) außerhalb des Kraftfahrzeugs (50) zu erfassen, und
wobei die Steuerung (2) derart ausgebildet ist, einen zu projizierenden Inhalt (11) zu empfangen und auf Grundlage der erfassten Lage (10) derart anzupassen, dass dieser beim Projizieren auf die Projektionsfläche (20) aus Sicht eines vorgegebenen Betrachters in perspektivisch korrekter Form erfasst werden kann, und
wobei die Steuerung (2) ferner derart ausgebildet ist, die mindestens eine Projektionseinrichtung (3) auf Grundlage des angepassten Inhalts (12) anzusteuern,
wobei die mindestens eine Projektionseinrichtung (3) ein hochauflösender Scheinwerfer (52) ist,
**dadurch gekennzeichnet, dass**
die Umfeldsensorik (51) mindestens einen Laser (5) und mindestens eine Kamera (6) umfasst, wobei die Steuerung (2) derart ausgebildet ist, den mindestens einen Laser (5) und die mindestens eine Kamera (6) derart anzusteuern, dass der mindestens eine Laser (5) ein vorgegebenes optisches Gitter auf die Projektionsfläche (20) abbildet und
die mindestens eine Kamera (6) dieses abgebildete optische Gitter erfasst, wobei die Steuerung (2) oder die Umfeldsensorik (51) ferner derart ausgebildet ist, eine Lage (10) und eine Oberflächenbeschaffenheit (13) der Projektionsfläche (20) auf Grundlage von von dem auf die Projektionsfläche (20) projizierten optischen Gitter erfassten Kameradaten zu bestimmen,
wobei eine Wellenlänge des mindestens einen Lasers (5) derart gewählt ist, dass ein menschlicher Betrachter diese nicht wahrnehmen kann,
wobei die Steuerung (2) ferner derart ausgebildet ist, eine Intensitätsverteilung innerhalb des zu projizierenden Inhalts auf Grundlage der erfassten Lage (10) und der erfassten Oberflächenbeschaffenheit (13) anzupassen, wobei die Intensitätsverteilung auf Grundlage eines Reflexions- und/oder Remissionsvermögens einzelner Abschnitte der Projektionsfläche (20) angepasst wird, sodass beim Projizieren eine aus Sicht des vorgegebenen Betrachters hinsichtlich der Intensität homogene Ausleuchtung erreicht wird.

2. System (1) nach Anspruch 1, **dadurch gekennzeichnet, dass** die Steuerung (2) ferner derart ausgebildet ist, den empfangenen Inhalt (11) zusätzlich auf Grundlage der erfassten Oberflächenbeschaffenheit (13) derart anzupassen, dass dieser beim Projizieren auf die Projektionsfläche (20) aus Sicht des vorgegebenen Betrachters über eine gesamte Projektion (30) hinweg in unverzeichneter Form erfasst werden kann.

3. System (1) nach einem der Ansprüche 1 oder 2, **dadurch gekennzeichnet, dass** die Steuerung (2) ferner derart ausgebildet ist, aktuelle und/oder vorhergesagte Rollbewegungen und/oder Nickbewegungen und/oder Gierbewegungen des Kraftfahrzeugs (50) beim Anpassen zu berücksichtigen.

4. System (1) nach einem der vorangegangenen Ansprüche, **dadurch gekennzeichnet, dass** die Steuerung (2) ferner derart ausgebildet ist, zusätzlich eine Ausleuchtungsprofilinformation (14) zu empfangen und den hochauflösenden Scheinwerfer (52) derart anzusteuern, dass ein vorgegebener Bereich außerhalb des Kraftfahrzeugs (50) in vorgegebener Weise ausgeleuchtet ist.

5. System (1) nach Anspruch 4, **dadurch gekennzeichnet, dass** die Steuerung (2) ferner derart ausgebildet ist, den hochauflösenden Scheinwerfer (52) in zumindest zwei Betriebszuständen anzusteuern, wobei in einem ersten Betriebszustand eine Projektion des zu projizierenden Inhalts (11) erfolgt und in einem zweiten Betriebszustand eine Ausleuchtung gemäß der empfangenen Ausleuchtungsprofilinformation (14) erfolgt.

6. Verfahren zum Projizieren eines informativen Inhalts für ein Kraftfahrzeug (50), umfassend die folgenden Schritte:
Erfassen einer Lage (10) einer Projektionsfläche (20) mittels einer Umfeldsensorik (51), Empfangen des zu projizierenden Inhalts (11) und Anpassen des empfangenen zu projizierenden Inhalts (11) auf Grundlage der erfassten Lage (10) mittels einer Steuerung (2), sodass der zu projizierende Inhalt (11) beim Projizieren auf die Projektionsfläche (20) aus Sicht eines vorgegebenen Betrachters in perspektivisch korrekter Form erfasst werden kann, und
Projizieren des angepassten Inhalts (12) auf die Projektionsfläche (20) mittels mindestens einer Projektionseinrichtung (3),
wobei die mindestens eine Projektionseinrichtung (3) ein hochauflösender Scheinwerfer (52) ist,
**dadurch gekennzeichnet, dass**
die Umfeldsensorik (51) mindestens einen Laser (5) und mindestens eine Kamera (6) umfasst, wobei mittels der Steuerung (2) der mindestens eine Laser (5) und die mindestens eine Kamera (6) derart angesteuert werden, dass der mindestens eine Laser (5) ein vorgegebenes optisches Gitter auf die Projektionsfläche (20) abbildet und die mindestens eine Kamera (6) dieses abgebildete optische Gitter erfasst, wobei mittels der Steuerung (2) oder der Umfeldsensorik (51) eine Lage (10) und eine Oberflächenbeschaffenheit (13) der Projektionsfläche (20) auf Grundlage von von dem auf die Projektionsfläche (20) projizierten optischen Gitter erfassten Kameradaten bestimmt werden,
wobei eine Wellenlänge des mindestens einen Lasers (5) derart gewählt ist, dass ein menschlicher Betrachter diese nicht wahrnehmen kann,
wobei mittels der Steuerung (2) ferner eine Intensitätsverteilung innerhalb des zu projizierenden Inhalts auf Grundlage der erfassten Lage (10) und der erfassten Oberflächenbeschaffenheit (13) angepasst wird, wobei die Intensitätsverteilung auf Grundlage eines Reflexions- und/oder Remissionsvermögens einzelner Abschnitte der Projektionsfläche (20) angepasst wird, sodass beim Projizieren eine aus Sicht des vorgegebenen Betrachters hinsichtlich der Intensität homogene Ausleuchtung erreicht wird.

7. Verfahren nach Anspruch 6, **dadurch gekennzeichnet, dass** das Anpassen des empfangenen Inhalts (11) zusätzlich auf Grundlage der erfassten Oberflächenbeschaffenheit (13) erfolgt, sodass dieser beim Projizieren auf die Projektionsfläche (20) aus Sicht des vorgegebenen Betrachters über eine gesamte Projektion (30) hinweg in unverzeichneter Form erfasst werden kann.

## Claims

1. System (1) for projecting informative content for a motor vehicle (50), comprising:
an environmental sensor system (51),
a controller (2), and
at least one projection device (3) for projecting the content (11),
the environmental sensor system (51) being designed to detect a position (10) of a projection surface (20) outside the motor vehicle (50), and
wherein the controller (2) is designed to receive a content (11) to be projected and to adapt it on the basis of the detected position (10) in such a way that, when projected onto the projection surface (20), said content can be captured in a perspectively correct form from the viewpoint of a prespecified observer, and
wherein the controller (2) is further configured to control the at least one projection device (3) on the basis of the adapted content (12), the at least one projection device (3) being a high-resolution headlight (52),
**characterized in that**
the environmental sensor system (51) comprises at least one laser (5) and at least one camera (6), wherein the controller (2) is designed to control the at least one laser (5) and the at least one camera (6) in such a way that the at least one laser (5) images a prespecified optical grating onto the projection surface (20) and the at least one camera (6) captures this imaged optical grating, the controller (2) or the environmental sensor system (51) further being designed to determine a position (10) and a state of the surface (13) of the projection surface (20) on the basis of camera data captured from the optical grating projected onto the projection surface (20),
wherein a wavelength of the at least one laser (5) is selected such that a human observer cannot perceive it,
wherein the controller (2) is further configured to adapt an intensity distribution within the content to be projected, on the basis of the detected position (10) and the detected state of the surface (13), the intensity distribution being adapted on the basis of a reflectivity and/or remission capacity of individual portions of the projection surface (20), so that during projection, illumination which is homogeneous in terms of intensity from the perspective of the prespecified observer is achieved.

2. System (1) according to claim 1, **characterized in that** the controller (2) is further designed to additionally adapt the received content (11) on the basis of the detected state of the surface (13), in such a way that, when projected onto the projection surface (20), said content can be captured in undistorted form from the perspective of the prespecified observer, over an entire projection (30).

3. System (1) according to either claim 1 or claim 2, **characterized in that** the controller (2) is further designed to take into account current and/or predicted rolling movements and/or pitching movements and/or yaw movements of the motor vehicle (50) during the adaptation.

4. System (1) according to any of the preceding claims,
**characterized in that** the controller (2) is further designed to additionally receive illumination profile information (14) and to control the high-resolution headlight (52) in such a way that a prespecified region outside the motor vehicle (50) is illuminated in a prespecified manner.

5. System (1) according to claim 4, **characterized in that** the controller (2) is further configured to control the high-resolution headlight (52) in at least two operating states, in a first operating state a projection of the content (11) to be projected taking place, and in a second operating state an illumination taking place according to the received illumination profile information (14).

6. Method for projecting informative content for a motor vehicle (50), comprising the following steps:
detecting a position (10) of a projection surface (20) by means of an environmental sensor system (51), receiving the content (11) to be projected and adapting the received content (11) to be projected on the basis of the detected position (10) by means of a controller (2), so that the content (11) to be projected can be detected in a perspectively correct form from the viewpoint of a prespecified observer when projected onto the projection surface (20), and
projecting the adapted content (12) onto the projection surface (20) by means of at least one projection device (3),
wherein the at least one projection device (3) is a high-resolution headlight (52),
**characterized in that**
the environmental sensor system (51) comprises at least one laser (5) and at least one camera (6), the at least one laser (5) and the at least one camera (6) being controlled by means of the controller (2) in such a way that the at least one laser (5) images a prespecified optical grating onto the projection surface (20) and the at least one camera (6) captures this imaged optical grating, a position (10) and a state of the surface (13) of the projection surface (20) being determined by means of the controller (2) or the environmental sensor system (51) on the basis of camera data captured from the optical grating projected onto the projection surface (20),
wherein a wavelength of the at least one laser (5) is selected such that a human observer cannot perceive it,
wherein, by means of the controller (2), an intensity distribution within the content to be projected further being adapted on the basis of the detected position (10) and the detected state of the surface (13), the intensity distribution being adapted on the basis of a reflectivity and/or remission capacity of individual portions of the projection surface (20), so that during projection homogeneous illumination is achieved with regard to intensity from the perspective of the prespecified observer.

7. Method according to claim 6, **characterized in that** the adaptation of the received content (11) is additionally carried out on the basis of the detected state of the surface (13), so that when projected onto the projection surface (20) said content can be captured in undistorted form from the perspective of the prespecified observer, over an entire projection (30).

## Revendications

1. Système (1) permettant la projection d'un contenu informatif pour un véhicule automobile (50), comprenant :
un ensemble de capteurs d'environnement (51),
une commande (2) et
au moins un dispositif de projection (3) permettant la projection du contenu (11),
dans lequel l'ensemble de capteurs d'environnement (51) est conçu de manière à détecter une position (10) d'une surface de projection (20) à l'extérieur du véhicule automobile (50), et
dans lequel la commande (2) est conçue de manière à recevoir un contenu (11) à projeter et à l'adapter sur la base de la position (10) détectée de telle sorte que celui-ci puisse être détecté sous une forme correcte en termes de perspective lors de la projection sur la surface de projection (20) du point de vue d'un observateur prédéfini, et
dans lequel la commande (2) est en outre conçue pour commander l'au moins un dispositif de projection (3) sur la base du contenu (12) adapté, dans lequel l'au moins un dispositif de projection (3) est un projecteur à haute résolution (52),
**caractérisé en ce que**
l'ensemble de capteurs d'environnement (51) comprend au moins un laser (5) et au moins une caméra (6), dans lequel la commande (2) est conçue de manière à commander l'au moins un laser (5) et l'au moins une caméra (6) de telle sorte que l'au moins un laser (5) reproduise un réseau optique prédéfini sur la surface de projection (20) et que l'au moins une caméra (6) détecte ce réseau optique reproduit, dans lequel la commande (2) ou l'ensemble de capteurs d'environnement (51) est en outre conçu(e) de manière à déterminer une position (10) et un état de surface (13) de la surface de projection (20) sur la base de données de caméra détectées par le réseau optique projeté sur la surface de projection (20),
dans lequel une longueur d'onde de l'au moins un laser (5) est choisie de telle sorte qu'un observateur humain ne puisse pas la percevoir,
dans lequel la commande (2) est en outre conçue de manière à adapter une répartition d'intensité à l'intérieur du contenu à projeter sur la base de la position (10) détectée et de l'état de surface (13) détecté, dans lequel la répartition d'intensité est adaptée sur la base d'un pouvoir de réflexion et/ou de réfraction de sections individuelles de la surface de projection (20), de sorte que lors de la projection, un éclairage homogène en termes d'intensité est obtenu du point de vue de l'observateur prédéfini.

2. Système (1) selon la revendication 1, **caractérisé en ce que** la commande (2) est en outre conçue de telle sorte que le contenu (11) reçu est adapté en plus sur la base de l'état de surface (13) détecté de telle sorte que celui-ci puisse être détecté sous une forme non répertoriée lors de la projection sur la surface de projection (20) du point de vue de l'observateur prédéfini sur toute une projection (30).

3. Système (1) selon l'une des revendications 1 ou 2, **caractérisé en ce que** la commande (2) est en outre conçue de manière à prendre en compte des mouvements de roulis et/ou de tangage et/ou de lacet actuels et/ou prédits du véhicule automobile (50) lors de l'adaptation.

4. Système (1) selon l'une des revendications précédentes,
**caractérisé en ce que** la commande (2) est en outre conçue de manière à recevoir en plus une information de profil d'éclairage (14) et à commander le projecteur à haute résolution (52) de telle sorte qu'une zone prédéfinie à l'extérieur du véhicule automobile (50) soit éclairée de manière prédéfinie.

5. Système (1) selon la revendication 4, **caractérisé en ce que** la commande (2) est en outre conçue de manière à commander le projecteur à haute résolution (52) dans au moins deux états de fonctionnement, dans lequel une projection du contenu (11) à projeter est effectuée dans un premier état de fonctionnement et un éclairage est effectué selon l'information de profil d'éclairage (14) reçue dans un second état de fonctionnement.

6. Procédé permettant la projection d'un contenu informatif pour un véhicule automobile (50), comprenant les étapes suivantes :
détection d'une position (10) d'une surface de projection (20) à l'aide d'un ensemble de capteurs d'environnement (51), réception du contenu (11) à projeter et adaptation du contenu (11) à projeter reçu sur la base de la position (10) détectée à l'aide d'une commande (2), de sorte que le contenu (11) à projeter peut être détecté sous une forme correcte en termes de perspective lors de la projection sur la surface de projection (20) du point de vue d'un observateur prédéfini, et
projection du contenu (12) adapté sur la surface de projection (20) à l'aide d'au moins un dispositif de projection (3),
dans lequel l'au moins un dispositif de projection (3) est un projecteur à haute résolution (52),
**caractérisé en ce que**
l'ensemble de capteurs d'environnement (51) comprend au moins un laser (5) et au moins une caméra (6), dans lequel l'au moins un laser (5) et l'au moins une caméra (6) sont commandés à l'aide de la commande (2) de telle sorte que l'au moins un laser (5) reproduit un réseau optique prédéfini sur la surface de projection (20) et l'au moins une caméra (6) détecte ce réseau optique reproduit, dans lequel une position (10) et un état de surface (13) de la surface de projection (20) sont déterminés à l'aide de la commande (2) ou de l'ensemble de capteurs d'environnement (51) sur la base de données de caméra détectées par le réseau optique projeté sur la surface de projection (20),
dans lequel une longueur d'onde de l'au moins un laser (5) est choisie de telle sorte qu'un observateur humain ne puisse pas la percevoir,
dans lequel à l'aide de la commande (2) une répartition d'intensité à l'intérieur du contenu à projeter est en outre adaptée sur la base de la position (10) détectée et de l'état de surface (13) détecté, dans lequel la répartition d'intensité est adaptée sur la base d'un pouvoir de réflexion et/ou de réfraction de sections individuelles de la surface de projection (20), de sorte que lors de la projection, un éclairage homogène en termes d'intensité est obtenu du point de vue de l'observateur prédéfini.

7. Procédé selon la revendication 6, **caractérisé en ce que** l'adaptation du contenu (11) reçu s'effectue en outre sur la base de l'état de surface (13) détecté, de sorte qu'il peut être détecté sous une forme non répertoriée lors de la projection sur la surface de projection (20) du point de vue de l'observateur prédéfini sur toute une projection (30).
